# EUROPEAN PATENT SPECIFICATION

(11) **EP 1 284 848 B1**
(45) Date of publication and mention of the grant of the patent: **17.11.2004**
(21) Application number: 01928094.0
(22) Date of filing: 10.05.2001
(51) Int. Cl.: B29C 44/34

(54) **METHOD AND APPARATUS FOR MAKING EXPANDED PLASTICS CONTAINERS**
VERFAHREN UND VORRICHTUNG ZUR HERSTELLUNG VON SCHAUMKUNSTSTOFFBEHÄLTERN
PROCEDE ET DISPOSITIF POUR LA FABRICATION DE CONTENANTS EN PLASTIQUE EXPANSE

(30) Priority: 10.05.2000 GB 0011289
(43) Date of publication of application: 26.02.2003
(73) Proprietor: AUTOBAR GROUP LIMITED, Brentford Middlesex TW8 ODY (GB)
(72) Inventor: GORNELL, Brian, West Lancashire L39 2BA (GB)
(74) Representative: Warren, Keith Stanley
(86) International application number: PCT/GB2001/002051
(87) International publication number: WO 2001/085421

(56) References cited:
- US-A- 4 060 577
- US-A- 4 065 531
- US-A- 5 100 597

## Description

The present invention relates to containers moulded from expanded plastics material, such as expanded polystyrene, and more particularly to expanded plastics containers designed to be fitted with snap-on lids, typically, moulded from sheet plastics material.

Expanded or foam plastics containers are conventionally formed by depositing beads or particles of a suitable plastics material into a mould cavity defining the desired shape of the container and injecting steam into the mould cavity to "cook" the plastics material. The beads comprise a thermoplastics material and a foaming agent and the term "cook" and like terminology are the terms commonly used to describe injecting steam directly into the beads disposed in the mould to achieve the necessary expansion and fusion of the beads for producing the container moulding.

Hitherto, expanded plastics cups and similar containers designed to receive lids have been moulded with relatively thick walls, for example, 2.2mm thick, and with the side wall of the container flared outwardly at the mouth to provide a rim portion capable of capturing a lid. The rim, itself, is rounded and because the rim portion is of generally the same thickness as the container side wall and is flared outwardly, the lid can resiliently engage over the rim, in an interference fit rather than with a positive, snap-on fit, and be captured by the rim.

This form of construction has previously been used for expanded plastics containers because it has proved difficult to mould such a container with a true rim flange for capturing a snap-on plastic lid, similarly to the roll type rim flange of a cup thermoformed from sheet plastics material.

Because such prior containers are relatively thick walled, when stacked in nested relation for the purposes of storage and transportation, the stack also tends to be undesirably lengthy. Moreover, the low density foam material forming the containers results in poor surface smoothness, thereby making it difficult to provide for acceptable printing of advertising and other matter on the external walls of the containers.

Methods and apparatus for moulding such containers are disclosed in the documents US-A-4 060 577, US-A-5 100 597 and US-A-4 065 531.

An object of the present invention is to provide a method and apparatus for moulding an expanded plastics container with a rim flange which projects radially outwardly about the mouth of the container, similarly to the roll type rim flange of a cup thermo-formed from sheet plastics material, and which is capable of capturing a snap-on lid.

From one aspect, therefore, the invention provides a method of moulding an expanded plastics container with a rim flange projecting outwardly from the container side wall(s) about the mouth of the container, according to claim 1.

The invention enables the moulding of an expanded plastics container which is a thin wall product formed from expanded plastics material of higher density than hitherto used in such products and which incorporates a roll type rim flange to accommodate a snap-on lid. With the invention, the container may, for example, have a wall thickness of 1.4mm. Moreover, the thin walled nature of the container enables a significant reduction in the height of a stack of such containers, when stacked in nested relation, and the increased density of the moulded plastics material results in a smoother surface finish which permits the application of full cover printing to a more acceptable quality and to a quality not possible with prior expanded plastics containers designed for accommodating lids.

Furthermore, the invention enables the production of a laminated product in which a laminate of flexible sheet material which may be printed on its outside surface and which may be a sleeve, or foldable into a sleeve, for surrounding the periphery of the container, optionally, for the full height of the container periphery, is adhered to the external surface of the container during the moulding process. In a preferred embodiment, the laminate has a heat activated adhesive layer and is positioned in the mould cavity directly against the mould wall defining the external wall of the container, whereby the external laminate is laminated with the expanded plastics material and with the external wall of the container during the moulding process. When seated directly under the rim flange of the container, the upper edge of the laminate is concealed.

Typically, an expanded plastics container is moulded with the mouth of the container directed downwardly and its bottom wall uppermost. Steam for cooking the raw plastics material is introduced or injected into the mould cavity adjacent the bottom wall. Cavities, which are alternatively flushed with steam to heat the mould during the cook cycle and with cooling liquid to cool the mould at the end of the cook cycle, may be provided adjacent the inside and outside of the mould cavity. In a preferred embodiment, the method of the invention may be realised by redirecting part of the steam utilised to flush one of the cavities during the cook cycle into the mould cavity at or adjacent the rim flange (e.g. just below the rim flange) of the container moulding, thereby to provide an additional or rim cook facility. Optimum results are achieved by redirecting the steam for this rim cook facility into the mould cavity at a location as close as possible to the rim flange moulding.

The present invention also provides a mould tool for moulding an expanded plastics container having a rim flange projecting outwardly from the container side wall(s) about he mouth of the container, according to claim 8.

In one embodiment, the container is moulded in an inverted position with its mouth downwardly and steam for cooking plastics material is injected at the upper end of the mould adjacent the bottom wall of the container. The mould tool may include a male mould part comprising a core section and an outer shell fitted over the core section so as to provide a heating/cooling cavity within the outer shell. The outer surface of shell moulds the internal surface of the container and the heating/cooling cavity may be substantially coextensive with the shell. The male mould part cooperates with a female mould part assembled over the male mould part to define the mould cavity. The female mould part may comprise an inner female shell which moulds the external wall of the container and a top mould member fitted over the outside of the female shell so as to provide a heating/cooling cavity substantially coextensive with the female shell and about the outside of the mould cavity. Suitable conduits are arranged to supply flushing steam or cooling liquid to the heating/cooling cavities. One of these conduits is connectable, under control of first valve means, to first passageways means communicating with the upper end of the mould cavity to permit steam to be injected into the mould to cook the moulding material. One of the heating/cooling cavities is connectable, via second passageway means controlled by second valve means, to the mould cavity at a position adjacent the bottom of the mould cavity and adjacent the rim zone to provide the additional cook facility for the rim flange moulding.

Upon reassembly of the mould tool preparatory to moulding another container, and following cooling and ejection of the previous moulded container, the heating/cooling cavities are flushed with steam to reheat the mould and the first valve means is actuated to inject steam into the mould cavity, via the first passageway means, to cook the plastics beads in the mould cavity and, during the cooking cycle, the second valve means is opened to redirect part of the steam flushing the heating/cooling cavity to the rim moulding area of the mould cavity to provide the additional cook facility.

Each passageway means may be connected, via ports, to an annular groove in the moulding surface of the relevant mould shell to assist distribution of the stream about the mould cavity, and a flexible ring seal is located within the annular groove. This ring seal is profiled in such a way as to allow steam under pressure to pass over the seal into the mould cavity but prevents the ingress of bead particles which may block the steam ports.

In order the present invention may be more readily understood, reference will now be made to the accompanying drawings, in which:-
Figure 1 is a half-sectional, half-elevational view of an expanded plastics cup produced by the method of the invention,
Figure 2 is an axial section illustrating an assembled mould tool according to the invention and ancillary couplings for producing the cup shown in Figure 1,
Figure 3 is an axial section through the assembled mould tool of Figure 2 on an enlarged scale,
Figure 4 is a fragmentary axial section illustrating the rim zone of the mould tool, and
Figures 5 and 6 are fragmentary sectional views illustrating the annular grooves and flexible ring seals via which steam is injected into the mould cavity of the mould tool.

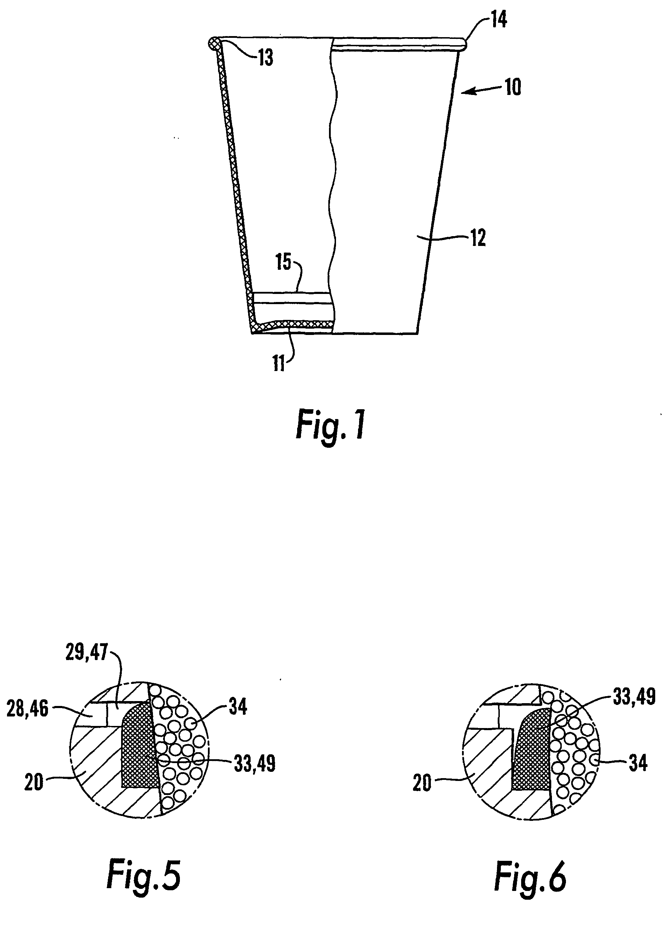

Referring to Figure 1 of the accompanying drawings, the expanded or foam plastics cup 10 produced by the method and mould tool of this invention may be moulded from expanded polystyrene material. The resulting moulding is a thin walled product of high density foam plastics material. It is of circular shape in plan and comprises a bottom wall 11 and a side wall 12 extending upwardly and outwardly from the bottom wall to a mouth 13 at the top of the cup where the side wall terminates in an annular rim flange 14 which projects radially outwardly from the side wall about the mouth of the container. The rim flange 14 is similar to the roll-type rim flange of a cup thermoformed from sheet plastics material and is designed for capturing a lid which may be snapped onto the rim flange to close the mouth of the container. A multiplicity of such cups may be stacked in nested relation and to prevent them from wedging together, when so stacked, making the cups difficult to separate from the stack, the cup 10 is moulded internally adjacent its bottom wall with an annular internal stacking shoulder 15 which engages with the periphery of the bottom wall 11 of an upper cup nested therein in order to resist compression of the inner cup into the outer cup.

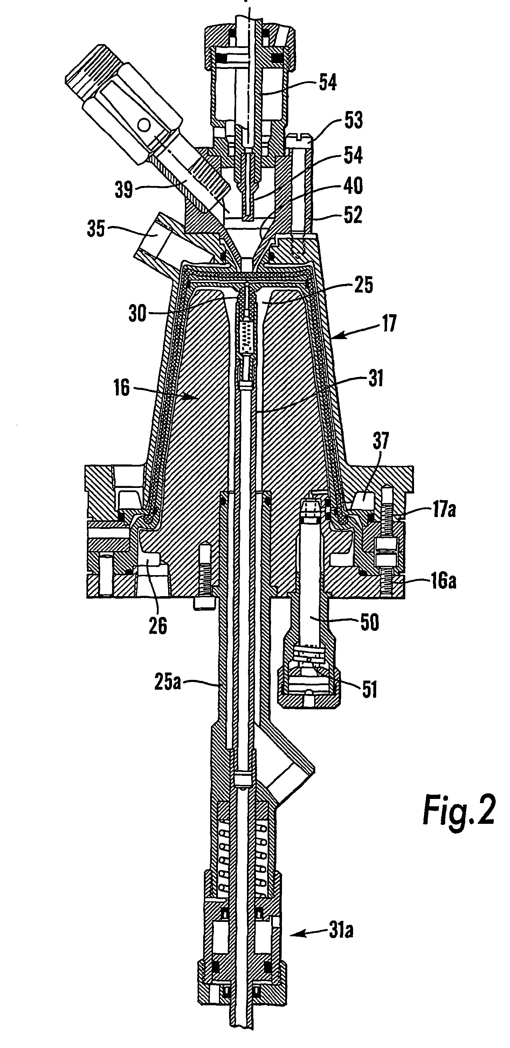

Referring to Figures 2, 3 and 4, the mould tool for producing the cup 10 illustrated in Figure 1 moulds the cup with its bottom wall 11 uppermost and its mouth 13 directed downwardly. The tool comprises male and female mould parts 16,17 which are assembled to form a mould cavity 18 for the cup 10 to be moulded. The male mould part 16 has a core section 19 and an outer shell 20 fitted over the core section so as to leave a heating/cooling cavity 21 between the outer shell and the core section. The external surface of the outer shell forms a moulding surface for the internal surfaces of the bottom and side walls of the cup 10 and the heating/cooling cavity 21 is substantially coextensive with the bottom and side walls of the mould cavity. The female mould part 17 comprises an inner female shell 22 which moulds the external surfaces of the bottom and side walls of the cup and a top mould member 23 which is fitted over the outside of the female shell so as to provide a heating/cooling cavity 24 between the female shell and the top mould member. This outer heating/cooling cavity is substantially coextensive with the bottom and side walls of the mould cavity. At the bottom end of the mould cavity 18, the outer shell 20 of the male mould part and the inner female shell 22 define the radially outwardly projecting rim flange 14 to be moulded about the mouth of the cup.

The core section and outer shell of the male mould part 16 are secured together at the bottom end of the mould tool by machine screws 16a and the inner female shell and the top mould member of the female mould part 17 are secured together by machine screws 17a. O-ring seals 38 are disposed between the components of the mould parts, at appropriate positions, to seal the components together.

Extending centrally through the male core section 19 to a position adjacent the upper end thereof is a central conduit 25 via which flushing steam for heating the mould during the cook cycle or cooling liquid for cooling the mould at the end of the cook cycle is alternatively supplied to the inner cavity 21. Flushing steam or cooling liquid is delivered to the conduit 25 by a pipe 25a coupled to the male core section by machine screws 25b and sealed to the conduit by an O-ring seal 25c. It exits the cavity 21 via an annular outlet 26 adjacent the bottom end of the mould tool. At its upper end, the conduit 25 is connected, via a valve port 27 to diametrically disposed passageways 28 communicating with the mould cavity 18 via an annular groove 29 (Figure 5) in the outer surface of the outer shell 20. The valve port 27 is controlled by a spring loaded valve member 30 disposed at the upper end of the conduit 25 and actuated by a hollow valve rod 31 projecting through the conduit to a suitable pneumatic actuating mechanism 31 a. The valve member 30 has an axial passageway 32 connected to the hollow actuating rod 31 to permit compressed air to be supplied through the rod, the valve member and the passageways 28 into the mould cavity so as to assist in ejecting a moulded cup from the mould cavity 18 at the end of the moulding cycle.

As illustrated in Figures 5 and 6, the annular groove 29 is fitted with a flexible ring seal 33 which is profiled in such a way as to allow steam under pressure to pass over the seal into the mould cavity but prevents the ingress of moulding beads 34 which may block the ports.

Flushing steam and cooling liquid are alternatively supplied to the outer heating/cooling cavity 24 via a port 35 in the top mould member 23, which port is connected to a suitable supply conduit (not shown). They exit from the cavity via an annular outlet 36 and annular manifold 37 adjacent the bottom end of the mould cavity.

Beads of a suitable moulding material for the cup, and comprising a thermoplastics material and a foaming agent, are supplied to the mould cavity through a conduit 39 coupled to the top mould member 23 by a coupling unit 52 bolted to the top mould member by machine screws 53 and connected to a funnel shaped port 40 in the inner female shell 22 which communicates with the mould cavity. Delivery of moulding beads to the mould cavity is assisted by the supply of compressed air through the air nozzle 54 also coupled to the port 40 by the coupling unit 52. Furthermore, compressed air is supplied to this nozzle when the mould parts 16 and 17 are separated at the end of a moulding cycle in order to retain the moulded cup on the male mould part preparatory to ejection from the tool.

Connected to the inner heating/cooling cavity 21 adjacent the bottom end of the male core section 19 is a passageway 41 which connects the bottom end of the heating/cooling cavity to a valve port 42 communicating with the end of a valve chamber 43. A second valve port 44 communicating with the valve chamber connects the latter to a circular cavity 45 in the male core section 19 and, in turn, the cavity 45 is connected, via a port 46 through the male outer shell 20 to an annular groove 47 (Figure 5) in the outer surface of the shell above and immediately adjacent the rim flange moulding zone. The circular cavity 45 houses an O-ring seal 48 for sealing the ports 44,46 against the ingress of flushing steam and cooling liquid from the cavity 21. The annular groove 47 is like the groove 29 and is similarly fitted with a ring seal 49 corresponding to the ring seal 33 and profiled in such a way as to allow steam under pressure to pass over the seal into the mould cavity but prevent the ingress of bead particles (see Figures 5 and 6). The valve ports 42,44 are controlled by a valve member 50 (Figure 2) slidably mounted in the bottom end of the core section 19 and projecting into the valve chamber 43. The valve member 50 is controlled by a spring loaded, pneumatic piston 51.

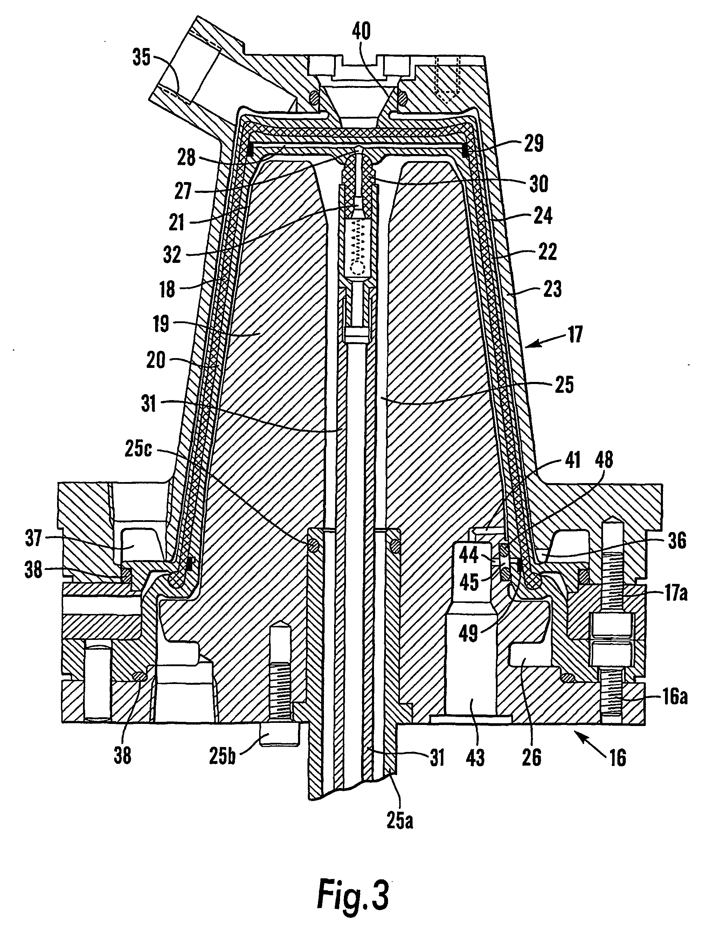

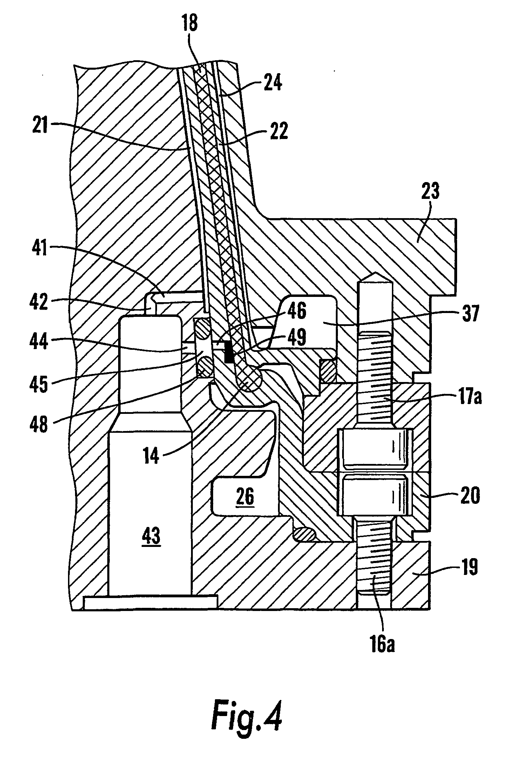

In order to mould an expanded plastics cup, the female mould part 17 is assembled to the male mould part 16, as illustrated in Figures 3 and 4, and plastics moulding beads or particles are injected into the mould cavity 18 via the funnel shaped port 40 in the female shell 22. When the mould cavity is full, steam is injected through the conduit 25 and the port 35 in order to flush the inner and outer cavities 21,24 with steam and thereby heat the mould. At the appropriate time in the moulding cycle, the pneumatically operated valve rod 31 is actuated in order to withdraw the valve member 30 and permit steam to enter the mould cavity 18 via the port 27, the passageways 28 and the annular groove 29 in order to cook the plastic beads in the mould cavity. Also, the pneumatically controlled valve member 50 is actuated in order to open the ports 42,44 and redirect steam from the inner heating/cooling cavity 21, adjacent its bottom end, into the rim zone of the moulding so as to deliver steam directly to the rim zone and provide a secondary cooking effect which facilitates moulding of the outwardly directed rim flange 14.

At the end of the cook cycle, the valve members 27,50 are closed and cooling liquid is supplied, via the conduit 25 and port 35, to the heating/cooling cavities 21,24 in order to cool the mould tool and the moulded cup, whereafter the male and female mould parts 16,17 are separated and compressed air is supplied through the hollow valve rod 31 and valve member 30 to the passageways 28 in order to blow air into the moulded cup and facilitate ejection of the cup from the male mould part.

The cup 10 produced by the above described process is a thin walled product and a stack of such cups forms a stack of lesser height than the equivalent number of cups of the thicker wall construction hitherto used for expanded plastics cups designed to capture snap-on sheet plastic lids. Moreover, the higher density of the foam material used for moulding the present cup also results in a product with a much smoother surface finish than the prior cups and this permits more acceptable printing of advertising and other material on the walls of the cup.

In a modification, the moulding process may be used to produce a cup of laminated construction in which a laminate of flexible sheet material, for example, paper or plastics sheet material printed on its outside surface with advertising or other matter, is laminated to the external surface of the cup side wall 12. In this modified process, which is fully described in our copending International application (Attorney's reference No 35730) entitled "Production of Expanded Plastics Containers" and filed concurrently herewith, a laminate formed of the sheet material foldable about itself into a sleeve and of slightly conical shape matching the side wall of the cup, is disposed within the female mould part 17 against the inner surface of the female shell 22 prior to assembly of the mould tool for moulding a cup. The laminate may, for example, be formed from sheet polypropylene material, and be provided on its inner surface with a heat activated adhesive and may extend for the full height of the side wall of the cup. The edge of the laminate adjacent the mouth of the cup is positioned directly below the rim flange moulding zone. Thereafter, the moulding process proceeds as described above and the resulting product is a cup of laminated construction with the laminate forming the outer surface of the cup and being seated directly under the rim flange so that its upper edge is concealed.

The method of producing a cup of laminated construction as described above enables the production of an expanded plastics cup with high quality printing on its surface whilst still retaining the heat insulating advantages of expanded or foam plastics material. The laminate also serves to strengthen or reinforce the thin walled expanded plastics cup.

Whilst particular embodiments have been described, it will be understood that modifications can be made without departing from the scope of the invention as defined by the appended claims.

## Claims

1. A method of moulding an expanded plastics container (10) having a bottom wall (11), a sidewall or sidewalls (12) extending upwardly from the bottom wall to a mouth (13) of the container, and a rim flange (14) projecting outwardly from the side wall(s) (12) about the container mouth (13), comprising the steps of disposing plastics material adapted for moulding an expanded product into a mould cavity (18) defining the container to be moulded with the rim flange, introducing steam into the mould cavity at the bottom wall moulding zone of the cavity to cook the plastics material and mould the expanded plastics container, and additionally directing steam into the mould cavity at or adjacent the rim flange moulding zone.

2. A method according to claim 1, wherein the expanded plastics container (10) is moulded with the mouth (13) of the container directed downwardly and its bottom wall (11) uppermost.

3. A method according to claim 1 or 2, wherein one or more cavities (21,24), which are flushed with steam to heat the mould during the cook cycle, are provided adjacent the inside and/or outside of the mould cavity (18) and the additional step of directing steam into the mould cavity adjacent the rim flange moulding zone is achieved by redirecting part of the flushing steam from one (21) of the cavities into the mould cavity at or adjacent the rim flange moulding zone.

4. A method according to claim 3, wherein said one cavity (21) for flushing steam is disposed adjacent the inside of the mould cavity and the steam is redirected from this inside cavity.

5. A method according to any preceding claim, wherein the steam directed into the mould cavity (18) at or adjacent the rim flange moulding zone is injected at a location below and closely adjacent the rim flange moulding zone.

6. A method according to any preceding claim, including the steps of disposing a laminate of flexible sheet material against a mould wall defining an external wall of the container (10) prior to disposing, in the mould cavity (18), the plastics material for moulding the expanded product, whereby the laminate is laminated to the external wall of the moulded container during the moulding cycle.

7. A method according to claim 6, wherein the laminate forms a sleeve completely surrounding the container (18) and is seated directly under the rim flange (14) of the container such that the upper edge of the laminate is concealed.

8. A mould tool for moulding an expanded plastics container (10) having a bottom wall (11), a sidewall or sidewalls (12) extending upwardly from the bottom wall to a mouth (13) of the container, and a rim flange (14) projecting outwardly from the container side wall(s) (12) about the mouth (13) of the container, said mould tool comprising male and female mould parts (16,17) which are assembled to form a mould cavity (18) defining the container having the rim flange, at least one cavity (21,24) for heating and/or cooling fluid in at least one of the mould parts adjacent the mould cavity and extending adjacent at least that part of the cavity defining the side wall(s) of the container, conduit means (25,35) for supplying steam to the heating/cooling cavity, first passageway means (28) via which steam is injected into the mould cavity and which communicates with the bottom wall moulding zone of the mould cavity, second passageway means (41-47) for directing a portion of the flushing steam from the heating/cooling cavity into the mould cavity at or adjacent the rim flange moulding zone of the mould cavity, and valve means (50) for controlling flow of steam via said second passage means.

9. A mould tool according to claim 8 or 9, wherein both mould parts (16,17) have heating/cooling cavities (21,24) substantially coextensive with at least that wall of the mould part moulding the side wall(s) (12) of the container.

10. A mould tool according to claim 8 or 9, wherein the heating/cooling cavity (21) of the male mould part (16) is connectable via the second passageway means (41-47) to the mould cavity (18) at a position adjacent the rim flange moulding.

11. A mould tool according to claim 8, wherein the male mould part (16) has a heating/cooling cavity (21) adjacent the mould cavity (18) and substantially coextensive with at least that part of the moulded cavity defining the side wall(s) (12) of the container, the conduit means (25) is connectable under control of second valve means (30) to the first passageway means (28) and the heating/cooling cavity (21) in the male mould part is connectable via the second passageway means (41-47) to the mould cavity at a position adjacent the rim flange moulding zone.

12. A mould tool according to claim 8, 9, 10 or 11, wherein the male mould part (16) comprises a core section (19) and an outer shell fitted over the core section so as to provide a heating/cooling cavity (21) within the outer shell, the outer surface of the outer shell moulding the internal surface of the container (10).

13. A mould tool according to any preceding claim 8 to 12, wherein the female mould part (17) comprises an inner female shell (22) which moulds the external wall of the container (10) and a top mould member (23) fitted over the outside of the female shell so as to provide a heating/cooling cavity (24) substantially coextensive with the female shell and about the outside of the mould cavity (18).

14. A mould tool according to any preceding claim 8 to 13, wherein each passageway means (28,46) is connected via an annular groove (29,47) in the moulding surface of the relevant mould part (16,17) to assist distribution of the steam about the mould cavity (18), and a flexible ring seal (33,49) is located within the annular groove, said ring seal being profiled so as to allow steam under pressure to pass over the seal into the mould cavity and prevent the ingress of moulding material.

15. A mould tool according to any preceding claim 8 to 14, wherein the female mould part (17) is separable from the male mould part (16) to permit removal of the moulded container (10) and the female mould part includes means (54) adjacent the bottom of the container for applying air pressure to the bottom of the container as the mould parts are separated in order to cause the moulded container (10) to be retained on the male mould part (16), and the male mould part includes means (31,32) for applying air pressure to the inside of the bottom of the container (10) in order to eject the moulded container from the male mould part.

## Patentansprüche

1. Ein Verfahren zum Formen eines Schaumkunststoffbehälters (10), der eine Bodenwand (11), eine sich von der Bodenwand aufwärts zu einer Öffnung (13) des Behälters erstreckende Seitenwand oder Seitenwände (12) und einen von der Seitenwand bzw. den Seitenwänden (12) nach außen um die Öffnung (13) des Behälters herum auskragenden Randkragen (14) aufweist, beinhaltend die Schritte des Einfüllens eines zum Formen eines Schaumstofferzeugnisses geeigneten Kunststoffmaterials in ein Formnest (18), welches den Behälter, der mit dem Randkragen geformt werden soll, definiert, des Einführens von Dampf in das Formnest an der Bodenwandformzone des Formnestes, um das Kunststoffmaterial zu erhitzen und den Schaumkunststoffbehälter zu formen und zusätzlich Dampf in das Formnest an der oder benachbart der Randkragenformzone zu leiten.

2. Ein Verfahren gemäß Anspruch 1, wobei der Schaumkunststoffbehälter (10) mit der Öffnung (13) des Behälters nach unten und seiner Bodenwand (11) ganz nach oben gerichtet geformt wird.

3. Ein Verfahren gemäß Anspruch 1 oder 2, wobei eine oder mehrere Aushöhlungen (21, 24), welche zum Erwärmen der Form während des Erhitzzyklus mit Dampf durchspült werden, benachbart der Innenseite und/oder Außenseite des Formnestes (18) vorgesehen sind und der zusätzliche Schritt des Leitens des Dampfes in das Formnest benachbart der Randkragenformzone durch das Zurückführen eines Teils des spülenden Dampfes von einer (21) der Aushöhlungen in das Formnest an oder benachbart der Randkragenformzone ausgeführt wird.

4. Ein Verfahren gemäß Anspruch 3, wobei die eine Aushöhlung (21) zum Durchspülen des Gases benachbart der Innenseite des Formnestes angeordnet ist und der Dampf aus dieser inneren Aushöhlung zurückgeleitet wird.

5. Ein Verfahren gemäß einem der vorangehenden Ansprüche, wobei der Dampf, der in das Formnest (18) an oder benachbart der Randkragenformzone eingeleitet wird, in einer Position unterhalb und sehr nah benachbart der Randkragenformzone eingespritzt wird.

6. Ein Verfahren gemäß einem der vorangehenden Ansprüche, beinhaltend die Schritte des Anordnens eines Laminats aus flexiblen Folienmaterial gegen eine eine äußere Wand des Behälters (10) definierende Formwand vor dem Einbringen des Kunststoffmaterials zum Formen des Schaumstoffprodukts in dem Formnest (18), wobei das Laminat an die Außenwand des geformten Behälters während des Formzyklus laminiert wird.

7. Ein Verfahren gemäß Anspruch 6, wobei das Laminat eine Hülse bildet, die den Behälter (18) vollständig umhüllt und direkt unter dem Randkragen (14) des Behälters gelegen ist, so dass der obere Rand des Laminats verborgen ist.

8. Ein Formwerkzeug zum Formen eines Schaumkunststoffbehälters (10), der eine Bodenwand (11), eine sich von der Bodenwand zu einer Öffnung (13) des Behälters nach oben erstreckende Seitenwand oder Seitenwände (12) und einen sich von der Seitenwand bzw. den Seitenwänden (12) um die Öffnung (13) des Behälters herum auskragenden Randkragen (14) aufweist, wobei das Formwerkzeug Stempel- und Matrizenformteile (16, 17), welche so angeordnet sind, ein Formnest (18) zu formen, das einen Behälter, der den Randkragen aufweist, definiert, wenigstens eine Aushöhlung (21, 24) zum Erwärmen und/oder Kühlen von Flüssigkeit in wenigstens einem der Formteile benachbart dem Formnest und die sich wenigstens benachbart dem Teil der Aushöhlung, der die Seitenwand bzw. Seitenwände des Behälters definiert, erstreckt, Leitungsmittel (25, 35), um Dampf in die Wärm- bzw. Kühlaushöhlung einzuspeisen, erste Durchgangsmittel (28), über die Dampf in das Formnest eingespritzt wird und die mit der Bodenwandformzone des Formnestes kommunizieren, zweite Durchgangsmittel (41 - 47), um einen Teil des spülenden Dampfes von der Wärm/Kühlaushöhlung in das Formnest an oder benachbart der Randkragenformzone des Formnestes zu leiten und Ventilmittel (50), um den Dampffluss über die zweiten Durchgangsmittel zu steuern, beinhaltet.

9. Ein Formwerkzeug gemäß den Ansprüchen 8 oder 9, wobei beide Formteile (16, 17) Wärm-/Kühlaushöhlungen (21, 24) aufweisen, die im Wesentlichen koextensiv mit wenigstens der die Seitenwand bzw. die Seitenwände (12) des Behälters formenden Wand des Formteils sind.

10. Ein Formwerkzeug gemäß den Ansprüchen 8 oder 9, wobei die Wärm-/Kühlaushöhlung (21) des Stempelformteils (16) über die zweiten Durchgangsmittel (41 - 47) mit dem Formnest ( 18) in einer Position benachbart der Randkragenformzone verbindbar ist.

11. Ein Formwerkzeug gemäß Anspruch 8, wobei das Stempelformteil (16) eine Wärm-/Kühlaushöhlung (21) aufweist, die benachbart dem Formnest (18) ist und im Wesentlichen koextensiv mit wenigstens dem Teil des Formnestes ist, der die Seitenwand bzw. Seitenwände (12) des Behälters definiert, die Leitungsmittel (25) unter Kontrolle der zweiten Ventilmittel (30) an die ersten Durchgangsmittel (28) verbindbar sind und die Wärm-/Kühlaushöhlung (21) in dem Stempelformteil über die zweiten Durchgangsmittel (41 - 47) an das Formnest in einer Position benachbart der Randkragenformzone verbindbar ist.

12. Ein Formwerkzeug gemäß den Ansprüchen 8, 9, 10 oder 11, wobei das Stempelformteil (16) einen Kernbereich (19) und eine äußere Schale, die über dem Kembereich so angeordnet ist, dass sie eine Wärm-/Kühlaushöhlung (21) innerhalb der äußeren Schale bereitstellt, beinhaltet, wobei die äußere Oberfläche der äußeren Schale die innere Oberfläche des Behälters (10) formt.

13. Ein Formwerkzeug gemäß einem der Ansprüche 8 bis 12, wobei das Matrizenformteil (17) eine innere Matrizenschale (22), welche die Außenwand des Behälters (10) formt und ein oberes Formbauteil (23), welches über der Außenseite der Matrizenschale so angeordnet ist, eine Wärm-/Kühlaushöhlung (24), die im Wesentlichen koextensiv mit der Matrizenschale ist und um die Außenseite des Formnestes (18) herum, bereitzustellen, beinhaltet.

14. Ein Formwerkzeug gemäß einem der vorangegangenen Ansprüche 8 bis 13, wobei jedes der Durchgangsmittel (28, 46) über eine ringförmige Nut (29, 47) in der Formfläche des relevanten Formteils (16, 17) verbunden ist, um die Verteilung des Dampfes um das Formnest (18) herum zu unterstützen und eine flexible Ringdichtung (33, 49) in der ringförmigen Nut angeordnet ist, wobei die Ringdichtung so profiliert ist, dass sie es dem Dampf ermöglicht, unter Druck über die Dichtung in das Formnest überzugehen und das Eindringen von Formmaterial verhindert.

15. Ein Formwerkzeug gemäß einem der vorangehenden Ansprüche 8 bis 14, wobei das Matrizenformteil (17) von dem Stempelformteil (16) trennbar ist, um das Entfernen des geformten Behälters (10) zu ermöglichen und das Matrizenformteil Mittel (54) nahe dem Boden des Behälters beinhaltet, um den Boden des Behälters mit Druckluft zu beaufschlagen, wenn die Formteile getrennt werden, um den geformten Behälter (10) zu veranlassen, auf dem Stempelformteil (16) zu verweilen und das Stempelformteil Mittel (31, 32) beinhaltet, um die Innenseite des Bodens des Behälters (10) mit Druckluft zu beaufschlagen, um den geformten Behälter von dem Stempelformteil auszuwerfen.

## Revendications

1. Procédé de moulage d'un récipient en plastique expansé (10) présentant une paroi inférieure (11), une paroi latérale ou des parois latérales (12) s'étendant vers le haut depuis la paroi inférieure vers un bec (13) du récipient, et un rebord (14) se projetant vers l'extérieur de la(des) paroi(s) latérale(s) (12) autour du bec (13) du récipient, comprenant les étapes de disposer une matière plastique, adaptée pour mouler un produit expansé, à l'intérieur d'une cavité de moule (18) définissant le récipient destiné à être moulé avec le bord, introduire de la vapeur à l'intérieur de la cavité de moule au niveau de la zone de moulage de paroi inférieure de la cavité pour cuire la matière plastique et mouler le récipient en plastique expansé, et en outre diriger la vapeur à l'intérieur de la cavité de moule au niveau de la zone de moulage du rebord ou de manière adjacente à celle-ci.

2. Procédé selon la revendication 1, dans lequel le récipient en plastique expansé (10) est moulé avec le bec (13) du récipient dirigé vers le bas et sa paroi inférieure (11) en dessus.

3. Procédé selon la revendication 1 ou 2, dans lequel une ou plusieurs cavité (s) (21, 24), qui sont remplies de vapeur pour chauffer le moule pendant le cycle de cuisson, sont prévues de manière adjacente à l'intérieur et/ou l'extérieur de la cavité de moule (18) et l'étape additionnelle de diriger la vapeur à l'intérieur de la cavité de moule de manière adjacente à la zone de moulage du rebord est réalisée en redirigeant une partie de la vapeur de remplissage depuis l'une (21) des cavités à l'intérieur de la cavité de moule au niveau de la zone de moulage du rebord ou de manière adjacente à celle-ci.

4. Procédé selon la revendication 3, dans lequel ladite cavité (21) pour la vapeur de remplissage est disposée de manière adjacente à l'intérieur de la cavité de moule et la vapeur est redirigée depuis cette cavité intérieure.

5. Procédé selon l'une quelconque des revendications précédentes, dans lequel la vapeur dirigée à l'intérieur de la cavité de moule (18) au niveau de la zone de moulage du rebord ou de manière adjacente à celle-ci est injectée à un emplacement situé au-dessous de la zone de moulage du rebord et étroitement adjacente à celle-ci.

6. Procédé selon l'une quelconque des revendications précédentes, comprenant les étapes de disposer un stratifié de matériau flexible à feuille contre une paroi de moule définissant une paroi externe du récipient (10) avant de disposer, dans la cavité de moule (18), la matière plastique destinée à mouler le produit expansé, le stratifié étant laminé sur la paroi externe du récipient moulé pendant le cycle de moulage.

7. Procédé selon la revendication 6, dans lequel le stratifié forme une gaine entourant complètement le récipient (18) et est logé directement au-dessous du rebord (14) du récipient, de telle sorte que le bord supérieur du stratifié soit dissimulé.

8. Outil de moule destiné à mouler un récipient en plastique expansé (10) présentant une paroi inférieure (11), une paroi latérale ou des parois latérales (12) s'étendant vers le haut depuis la paroi inférieure vers un bec (13) du récipient, et un rebord (14) se projetant vers l'extérieur de la (des) paroi(s) latérale(s) (12) autour du bec (13) du récipient, ledit outil de moule comprenant des parties de moule mâle et femelle (16, 17) qui sont assemblées pour former une cavité de moule (18) définissant le récipient présentant le rebord, au moins une cavité (21, 24) destinée à chauffer et/ou refroidir le fluide dans au moins l'une des parties de moule adjacentes à la cavité de moule et s'étendant de manière adjacente à au moins cette partie de la cavité définissant la(les) paroi(s) latérale(s) du récipient, des moyens formant conduit (25, 35) destinés à amener la vapeur à la cavité de chauffage/refroidissement, des premiers moyens formant passage (28) via lesquels la vapeur est injectée à l'intérieur de la cavité de moule et qui communiquent avec la zone de moulage de paroi inférieure de la cavité de moule, des seconds moyens de passage (41 à 47) destinés à diriger une partie de la vapeur de remplissage depuis la cavité de chauffage/de refroidissement à l'intérieur de la cavité de moule au niveau de la zone de moulage du rebord de la cavité de moule ou de manière adjacente à celle-ci, et des moyens formant soupape (50) destinés à commander un écoulement de vapeur via lesdits seconds moyens formant passage.

9. Outil de moule selon la revendication 8 ou 9, dans lequel les deux parties de moule (16, 17) présentent des cavités de chauffage/de refroidissement (21, 24) sensiblement coétendues, avec au moins cette paroi de la partie de moule moulant la(les) paroi(s) latérale(s) (12) du récipient.

10. Outil de moule selon la revendication 8 ou 9, dans lequel la cavité de chauffage/de refroidissement (21) de la partie mâle de moule (16) peut être reliée via les seconds moyens formant passage (41 à 47) à la cavité de moule (18à une position adjacente au moulage du rebord.

11. Outil de moule selon la revendication 8, dans lequel la partie mâle de moule (16) présente une cavité de chauffage/de refroidissement (21) adjacente à la cavité de moule (18) et sensiblement coétendue avec au moins cette partie de la cavité moulée définissant la(les) paroi(s) latérale(s) (12) du récipient, les moyens formant conduit (25) pouvant être reliés sous l'effet de la commande des seconds moyens formant soupape (30) aux premiers moyens formant passage (28) et la cavité de chauffage/de refroidissement (21) dans la partie mâle de moule peut être reliée via les seconds moyens formant passage (41 à 47) à la cavité de moule à une position adjacente à la zone de moulage du rebord.

12. Outil de moule selon la revendication 8, 9, 10 ou 11, dans lequel la partie mâle de moule (16) comprend une section de noyau (19) et une coque externe ajustée sur la section de noyau, de manière à fournir une cavité de chauffage/de refroidissement (21) à l'intérieur de la coque externe, la surface externe de la coque externe moulant la surface interne du récipient (10).

13. Outil de moule selon l'une quelconque des revendications précédentes 8 à 12, dans lequel la partie femelle de moule (17) comprend une coque femelle interne (22) qui moule la paroi externe du récipient (10) et un élément de moule supérieur (23) ajusté sur l'extérieur de la coque femelle, de manière à fournir une cavité de chauffage/de refroidissement (24) sensiblement coétendue avec la coque femelle et autour de l'extérieur de la cavité de moule (18).

14. Outil de moule selon l'une quelconque des revendications précédentes 8 à 13, dans lequel chacun des moyens formant passage (28, 46) est relié via une rainure annulaire (29, 47) dans la surface de moulage de la partie de moule appropriée (16, 17) pour aider la distribution de vapeur autour de la cavité de moule (18), et un joint torique flexible (33, 49) est placé à l'intérieur de la rainure annulaire, ledit joint torique étant profilé de manière à permettre à la vapeur sous pression de passer au-dessus du joint à l'intérieur de la cavité de moule et d'empêcher l'entrée du matériau de moulage.

15. Outil de moule selon l'une quelconque des revendications précédentes 8 à 14, dans lequel la partie femelle de moule (17) peut être séparée de la partie mâle de moule (16) pour permettre le retrait du récipient moulé (10) et la partie femelle de moule comprend des moyens (54) adjacents à la partie inférieure du récipient destinés à appliquer une pression d'air sur la partie inférieure du récipient, lorsque les parties de moule sont séparées, afin d'amener le récipient moulé (10) à être retenu sur la partie mâle de moule (16), et la partie mâle de moule comprend des moyens (31, 32) destinés à appliquer une pression d'air sur le côté intérieur de la partie inférieure du récipient (10), afin d'éjecter le récipient moulé de la partie mâle de moule.
